# EUROPEAN PATENT SPECIFICATION

(11) **EP 3 525 089 B1**
(45) Date of publication and mention of the grant of the patent: **29.04.2026**
(21) Application number: 17894233.0
(22) Date of filing: 24.01.2017
(51) Int. Cl.: G06F 9/44, G06F 9/451

(54) **GRAPHICAL USER INTERFACE (GUI) SYSTEM**
SYSTEM FÜR GRAFISCHE BENUTZEROBERFLÄCHE (GUI)
SYSTÈME D'INTERFACE UTILISATEUR GRAPHIQUE (GUI)

(43) Date of publication of application: 14.08.2019
(73) Proprietor: China Techenergy Co., Ltd, Beijing 100094 (CN); China General Nuclear Power Corporation (CGN), Shenzhen, Guangdong 518027 (CN)
(72) Inventor: JIANG, Guojin, Beijing 100094 (CN); MA, Zhonggang, Beijing 100094 (CN); LI, Meng, Beijing 100094 (CN); WANG, Xiaowei, Beijing100094 (CN); DOU, Weiwei, Beijing 100094 (CN); MA, Jianxin, Beijing 100094 (CN); ZHANG, Zhihui, Beijing 100094 (CN)
(74) Representative: Germain Maureau
(86) International application number: PCT/CN2017/072492
(87) International publication number: WO 2018/137144

(56) References cited:
- WO-A1-2014/206055
- CN-A- 1 917 622
- CN-A- 101 067 799
- CN-A- 101 067 799
- CN-A- 101 477 461
- CN-A- 101 477 461
- CN-A- 106 933 567
- US-A1- 2011 252 355

## Description

### Technical Field

The embodiment of the invention relates to the technical field of nuclear power, in particular to a graphical user interface (GUI) system.

### Background Art

There are various GUI systems on the market currently, such as: GWES of WinCE (graphical user interface of Microsoft embedded operating system, including graphics, windows, event subsystem, consisting of Application Programming Interface (API), User Interface (UI) and Graphic Device Interface (GDI), wherein a message mechanism is included), MiniGUI (middleware of GUI based on an embedded Linux system, supporting multithreading and multiprocess) and UC/GUI (a GUI that supports multiple environments and can operate in a single task, multitask, or foreground-background mode). Although the above GUI systems have colorful functions, none of them can meet the requirements of nuclear power safety standards (IEC 60880). Documents D1=WO14206055A1, D2=CN101477461A, D3=CN101067799A, disclose such known GUI systems.

### Summary of the Invention

The embodiment of the invention provides a graphical user interface (GUI) system, which is applied to the field of nuclear power safety level.

An aspect of the embodiment of the present invention provides a graphical user interface (GUI) system, comprising:
a graphic library module (100), used for analyzing graphic data in configuration files;
an icon library module (102), used for analyzing icon data in configuration files;
a graph display module (104), used for drawing a GUI graph according to the data obtained by analyses of the graphic library module (100) and the data obtained by analyses of the icon library module (102);wherein the configuration files further comprises algorithm data, network configuration data and field device configuration data;
wherein the graphic library module (100) is further used for displaying status information of a field device and/or receiving an input through a manual operation panel to control operation of the field device, and running a logical algorithm associated with the manual operation panel and stored in the algorithm data;
wherein, the configuration filesare used to indicate the basic settings and basic files loaded by the GUI system, and is a number of engineering project application files generated by configuration and compilation through EAST(Engineer Application Software Toolkit) development environment; without changing the GUI system code, the engineering application of different nuclear power projects are realized through EAST configuration, for different nuclear power projects, the whole GUI system does not need to be redesigned, but only the configuration files need to be compiled.

The graphical user interface (GUI) system provided by the embodiment of the invention is applied to the technical field of nuclear power safety level and meets the requirements of different nuclear power projects by compiling configuration files, the system comprising: a graphic library module (100), used for analyzing graphic data in configuration files; an icon library module (102), used for analyzing icon data in configuration files; a graph display module (104), used for drawing a GUI graph according to the data obtained by analyses of the graphic library module and the data obtained by analyses of the icon library module (102); the configuration files are used for indicating basic settings and basic files loaded by the GUI system. The safety level GUI system provided by the embodiment of the invention is a platform product, thus it's not necessary to redesign the whole GUI system for different nuclear power projects, with only configuration files required to be compiled, workload reduced and V&V (Validation and Verification) evaluation skipped.

### Brief Description of the Drawings

FIG. 1 is a schematic structural diagram of a graphical user interface (GUI) system according to the embodiment 1 of the present invention;
FIG. 2 is a schematic structural diagram of a GUI system for a graphical user interface according to the embodiment 2 of the present invention;
FIG. 3 is a schematic structural diagram of a GUI system for a graphical user interface according to the embodiment 3 of the present invention;
FIG. 4 is a schematic diagram of a storage structure of a graphical user interface (GUI) system according to the embodiment 4 of the present invention; and
FIG. 5 is a data flow diagram of a graphical user interface (GUI) system according to the embodiment 5 of the present invention.

### Detailed Description of the Invention

Reference will now be made to the embodiment and the accompanying drawings, wherein like reference numerals refer to like elements throughout the several views, to further illustrate the implementations. The following examples are illustrative.

It will be understood by those skilled in the art that the terms "first" and the like in the embodiment of the present invention are used solely to distinguish one from another step, apparatus, module, and the like and are not intended to represent any particular technical meaning or essential logical order therebetween.

### Embodiment 1

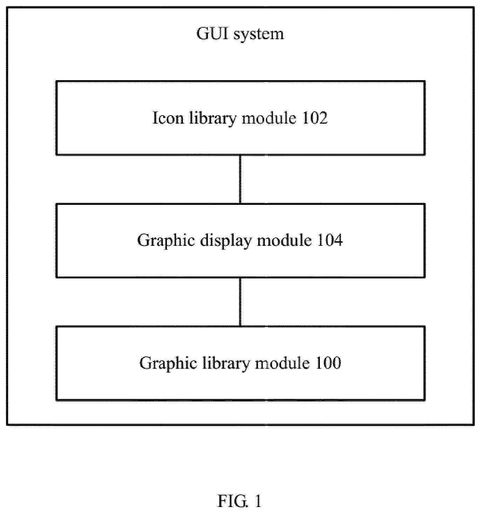

FIG. 1 is a schematic structural diagram of a graphical user interface (GUI) system according to the embodiment 1 of the present invention.

Referring to FIG. 1, the present embodiment provides a graphical user interface (GUI) system including: a graphic library module 100, used for analyzing graphic data in configuration files, for example, analyzing information such as graphic coordinates, length and width and the like in configuration files; the graphic data in the present embodiment including points, lines, planes, buttons, text, and manual controls;
an icon library module 102, used for analyzing icon data in configuration files, and the icon data in the embodiment including the length of the icon, the width of the icon, the picture content of the icon and the like; and
a graphic display module 104, used for providing a graphic drawing interface for an application layer program, and drawing GUI graphics according to the data obtained by analyses of the graphic library module 100 and the data obtained by analyses of the icon library module 102; the graphic drawing interface in the embodiment including point-drawing interfaces, line segment-drawing interfaces, circle-drawing interfaces, rectangle-drawing interfaces and interfaces for drawing other polygons, background-filling interfaces, circle-filling interfaces, ellipse-filling interfaces, rectangle-filling interfaces, image-display interfaces, text-display interfaces and the like. The graphic library module is further used for displaying status information of a field device and/or receiving an input through a manual operation panel to control operation of the field device, and running a logical algorithm associated with the manual operation panel and stored in the algorithm data.

The configuration file in this embodiment is used to indicate basic settings and basic files loaded by the GUI system. The GUI system provided by the embodiment can adapt to different nuclear power projects by compiling configuration files.

In order to solve the problem that there is no self-reliant domestic GUI system product to apply in the field of the nuclear power safety level, the embodiment of the invention provides a graphical user interface (GUI) system, which is applied to the technical field of nuclear power safety level and meets the requirements of different nuclear power projects by compiling configuration files, the system comprising: a graphic library module, used for analyzing graphic data in configuration files; an icon library module, used for analyzing icon data in configuration files; a graph display module, used for drawing a GUI graph according to the data obtained by analyses of the graphic library module and the data obtained by analyses of the icon library module; wherein the configuration files are used for indicating basic settings and basic files loaded by the GUI system. The GUI system provided by the embodiment of the invention is a platform product, thus it's not necessary to redesign the whole GUI system for different nuclear power projects, with only configuration files required to be compiled, workload reduced and V&V evaluation skipped.

### Embodiment 2

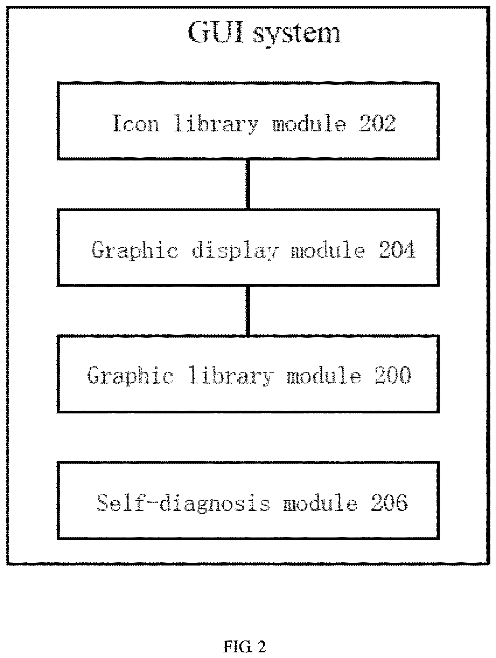

FIG. 2 is a schematic structural diagram of a GUI system for a graphical user interface according to the embodiment 2 of the present invention.

Referring to FIG. 2, the present embodiment provides a graphical user interface (GUI) system including: a graphic library module 200, used for analyzing graphic data in configuration files, for example, analyzing graphic information such as coordinates, length and width and the like in configuration files, the graphic data in the present embodiment including points, lines, planes, buttons, text, and manual controls; wherein:
in addition to graphical data, configuration files in this embodiment may include algorithm data, network configuration data, and field device configuration data, etc.;
the graphic library module 200 in this embodiment is also used to display status information for the field devices, and/or to receive input via the operation panel to control operation of the field devices, and to run logical algorithms associated with the operation panel stored in the algorithm data; the field device may include valves (degree of opening and closing), sensors, switching value devices and the like; the manual operation panel is a set of predefined controls, including point controls, line controls, plane controls, text controls, icon controls, and the like; each control is associated with a variable, and the GUI system in the embodiment displays the state of each control according to the state of the variable associated with the control; the logical algorithm is stored in the algorithm data, and the logical relationships between the control and the variable and between a control and another in the manual operation panel are all processed by the logical algorithm;
optionally, the GUI system in the present embodiment may further include a plurality of templates of the manual operation panel for indicating use cases of the manual operation panel;
an icon library module 202, used for analyzing icon data in configuration files, the icon data in the embodiment including the length of the icon, the width of the icon, the picture content of the icon and the like; and
a graphic display module 204, used for providing a graphic drawing interface for an application layer program, and drawing GUI graphics according to the data obtained by analyses of the graphic library module 200 and the data obtained by analyses of the icon library module 202; the graphic drawing interface in the embodiment including point-drawing interfaces, line segment-drawing interfaces, circle-drawing interfaces, rectangle-drawing interfaces and interfaces for drawing other polygons, background-filling interfaces, circle-filling interfaces, ellipse-filling interfaces, rectangle-filling interfaces, image-display interfaces, text-display interfaces and the like.

Optionally, the GUI system provided by the embodiment further comprises: a self-diagnosis module 206, used for performing fault diagnosis on the RAM and the ROM of the GUI system and monitoring the program execution sequence of the GUI system. The RAM and the ROM in the present embodiment are two parts divided from the memory of the GUI system. The ROM is a read-only area that stores icon data, graphic data, and a font library. The font library stored in the ROM is copied to the ROM by FLASH of the GUI system. And the self-diagnosis module 206 is used for performing ROM fault diagnosis by determining whether the cyclic redundancy check value of the ROM is the same as the cyclic redundancy check value of the GUI system in the initialization phase when the GUI system is in the periodic operation phase. The RAM is a readable and writable area for storing dynamic page parameter data and algorithm data. The graphic data in this embodiment is associated with a memory address in RAM where dynamic page parameter data is stored. The data stored in RAM can change at any time during the periodic operation of the GUI system. After an initialization phase of the GUI system, a periodic operation phase of a conditional loop is entered, and functions of hardware monitoring, network communication, algorithm operation, graphic display, hardware interface data reading and the like are sequentially executed.

The configuration file in this embodiment is used to indicate basic settings and basic files loaded by the GUI system. The GUI system provided by the embodiment can adapt to different nuclear power projects by compiling configuration files.

In order to solve the problem that there is no self-reliant domestic GUI system product to apply in the field of the nuclear power safety level, the embodiment of the invention provides a graphical user interface (GUI) system, which is applied to the technical field of nuclear power safety level and meets the requirements of different nuclear power projects by compiling configuration files, the system comprising: a graphic library module, used for analyzing graphic data in configuration files; an icon library module, used for analyzing icon data in configuration files; a graph display module, used for drawing a GUI graph according to the data obtained by analyses of the graphic library module and the data obtained by analyses of the icon library module; wherein the configuration files are used for indicating basic settings and basic files loaded by the GUI system. The GUI system provided by the embodiment of the invention is a platform product, thus it's not necessary to redesign the whole GUI system for different nuclear power projects, with only configuration files required to be compiled, workload reduced and V&V evaluation skipped.

The GUI system in the embodiment provides a plurality of templates of the manual operation panel, which facilitates designing the manual operation panel.

The self-diagnosis module carries out fault diagnosis on the RAM and the ROM, monitors the program execution sequence of the GUI system, and improves the safety and stability of the GUI system.

### Embodiment 3

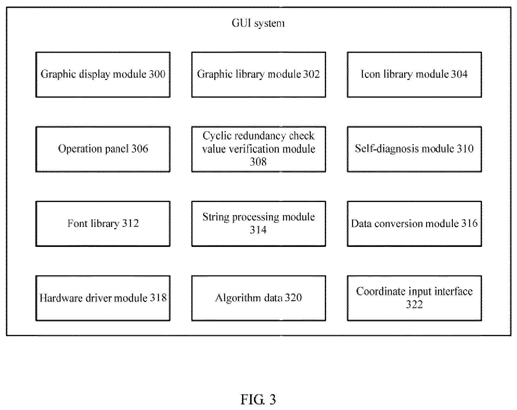

FIG. 3 is a schematic structural diagram of a GUI system for a graphical user interface according to the embodiment 3 of the present invention.

Referring to FIG. 3, the present embodiment provides a graphical user interface (GUI) system, including: a graphic display module 300, a graphic library module 302, an icon library module 304, an operation panel 306, a cyclic redundancy check value verification module 308, a self-diagnosis module 310, a font library 312, a string processing module 314, a data conversion module 316, a hardware driving module 318, algorithm data 320 and a coordinate input interface 322.

The graphic display module 300 provides a graphic drawing interface to an application layer program, wherein the graphic drawing interface in the embodiment includes point-drawing interfaces, line segment-drawing interfaces, circle-drawing interfaces, rectangle-drawing interfaces and interfaces for drawing other polygons, background-filling interfaces, circle-filling interfaces, ellipse-filling interfaces, rectangle-filling interfaces, image-display interfaces, text-display interfaces and the like.

The graphic library module 302 analyzes information such as graphics coordinates, length and width and the like in configuration files, and can specifically analyzes points, lines, planes, buttons, text, and manual operator controls, etc. The graphic library module 302 has two functions in the GUI system, one is to display the status information of the field device; the other is to allow the user to operate the manual operation panel to achieve control of the field device while running the logic algorithms associated with the manual operation panel stored in algorithm data 320 to achieve operational feedback, fast and slow data transmission and other functions.

The icon library module 304 stores icon information including length information of the icons, width information of the icons, and picture content in the icons.

The operation panel 306 is a manual operation panel that includes panel logic (logic algorithms) that is configured by the configuration program and then downloaded to the GUI system.

The cyclic redundancy check value verification module 308 primarily handles the calculation, checking, and appending for cyclic redundancy check values.

The self-diagnosis module 310 is mainly responsible for diagnosing faults of the ROM and the RAM and monitoring the execution sequence of programs.

The font library 312 provides a font library for screen displays that meets the human factor standard NUREG0700.

The string processing module 314 is used to obtain the length of the string, copy the string, perform string comparisons and string lookups, etc.

The data conversion module 316 is used for converting characters into floating point numbers and interconversion among integer data, wherein interconversion among integer data includes conversion of unsigned short integer data into signed long integer data.

The hardware driver module 318 provides a serial peripheral interface (SPI) bus driver, a FLASH driver, a universal asynchronous receiver/transmitter (UART) driver, a liquid crystal display (LCD) driver, a dot matrix driver and a touch screen driver. The hardware driver module 318 does not use the interrupt function and does not use Direct Memory Access (DMA) function.

The algorithm data 320 is a logical algorithm generated for the user configuration and is written in standard C language.

The coordinate input interface 322 reads coordinate information of the display screen, for example, reads coordinate information of a touch display screen, and feeds the coordinate information back to the GUI system.

In order to solve the problem that there is no self-reliant domestic GUI system product to apply in the field of the nuclear power safety level, the embodiment of the invention provides a graphical user interface (GUI) system, which is applied to the technical field of nuclear power safety level and meets the requirements of different nuclear power projects by compiling configuration files, the system comprising: a graphic library module, used for analyzing graphic data in configuration files; an icon library module, used for analyzing icon data in configuration files; a graph display module, used for drawing a GUI graph according to the data obtained by analyses of the graphic library module and the data obtained by analyses of the icon library module; wherein the configuration files are used for indicating basic settings and basic files loaded by the GUI system. The GUI system provided by the embodiment of the invention is a platform product, thus it's not necessary to redesign the whole GUI system for different nuclear power projects, with only configuration files required to be compiled, workload reduced and V&V evaluation skipped.

The self-diagnosis module carries out fault diagnosis on the RAM and the ROM, monitors the program execution sequence of the GUI system, and improves the safety and stability of the GUI system.

### Embodiment 4

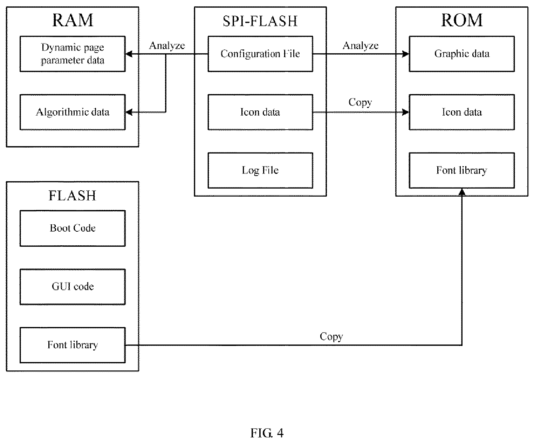

FIG. 4 is a storage structure diagram of a graphical user interface (GUI) system according to the embodiment 4 of the present invention.

Referring to FIG. 4, the present embodiment provides a graphical user interface (GUI) system including: RAM, ROM, SPI-FLASH, and FLASH. The RAM is a readable and writable area divided from a memory and used for storing dynamic page parameter data and algorithm data. Running a logical algorithm associated with the manual operation panel and stored in the algorithm data. The dynamic page parameter data is associated with a dynamic data area address pointed by each static graphic data (such as a text box, a button, a manual operation panel and the like) in the initialization phase of the GUI system. During the GUI system periodic operation phase, the data in RAM changes at any time. The ROM is a read-only area divided from a memory and used for storing icon data, graphic data and a font library, and the ROM is regularly checked in the periodic operation phase of the GUI system. Specifically, in an initialization phase of the GUI system, a cyclic redundancy check value can be calculated for the ROM according to a preset capacity, such as 1KB, and stored in a preset location. In the periodic operation phase of the GUI system, the contents in the ROM are checked according to a preset capacity sequence, and whether the contents in the ROM are rewritten or not is determined. The SPI-FLASH is used for storing human-machine interface data and includes configuration files, icon data, and log files.

The configuration files are written into the SPI-FLASH of the GUI system when the GUI system is in a downloading mode. FLASH stores program code that includes Boot code, GUI code, and a font library.

In order to solve the problem that there is no self-reliant domestic GUI system product to apply in the field of the nuclear power safety level, the embodiment of the invention provides a graphical user interface (GUI) system, which is applied to the technical field of nuclear power safety level, since FLASH and SPI-FLASH are physically isolated, program codes stored in FLASH are also physically isolated from configuration files, when configuration files are compiled for different nuclear power projects, the program codes are not influenced, or when the program codes are modified, configuration files are not influenced, and the safety of the GUI system is improved.

Moreover, the log files are stored in the non-erasable SPI-FLASH, free from being damaged or lost, thus the IEC-60880 nuclear safety standard is met.

### Embodiment 5

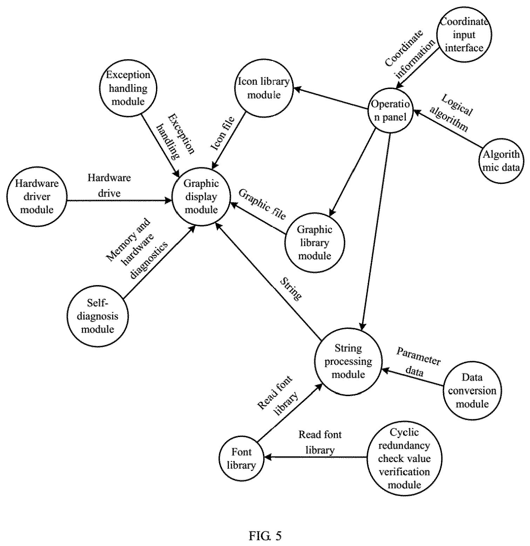

FIG. 5 is a data flow diagram of a graphical user interface (GUI) system according to the embodiment 5 of the present invention.

Referring to FIG. 5, in the GUI (graphical user interface) system provided by the embodiment, the graphic display module is a basic drawing module for the GUI system, and the graphic display module directly calls hardware drivers of SPI-FLASH, FLASH, UART, LCD and the like through the hardware driver module downwards and connects various functional units upwards.

Wherein the various functional units include a graph library module, an icon library module, an operation panel, a cyclic redundancy check value verification module, a self-diagnosis module, a font library, a string processing module, a data conversion module, algorithm data, a coordinate input interface and an exception handling module;
the coordinate input interface is used for calling the UART hardware driver to read the coordinate information of the touch screen and transmitting the coordinate information to the operation panel;
the operation panel is used for dynamically displaying the operation feedback information of the field device by executing the corresponding logic algorithm in the algorithm data; and the logic algorithm has a secondary operation (confirmation or cancellation) function, so that misoperation of a user is prevented, the human factor standard is met, and the safety and the reliability of the GUI system are improved;
the data conversion module is used for converting the received parameter data into strings, and the string processing module normalizes the strings obtained through conversion and loads a font library; the character library is checked by the cyclic redundancy check value verification module in the initialization phase of the GUI system;
the self-diagnosis module is used for regularly diagnosing faults of the ROM, the RAM and the hardware equipment;
the exception handling module is used for displaying a fault code in a designated area of the screen and recording a fault log when the GUI system has a serious fault caused by software and hardware, meanwhile, the GUI code runs into a fault mode, the log files are stored in the SPI-FLASH during the fault mode, and the IEC-60880 nuclear safety standard is met;
the graphic library module is used for analyzing graphic data in configuration files to obtain graphic files such as basic graphics, buttons, text and the like in the operation panel;
the icon library module is used for analyzing icon data in configuration files to obtain icon files in the operation panel; and
the image display module is used for displaying strings processed by the string processing module; also used for displaying graphic files such as basic graphics, buttons, texts and the like in the operation panel and icon files in the operation panel;
also used for displaying diagnosis results of memory, hardware and the like; and also used to display exception handling status and results, etc.

In order to solve the problem that there is no self-reliant domestic GUI system product to apply in the field of the nuclear power safety level, the embodiment of the invention provides a graphical user interface (GUI) system, which is applied to the technical field of nuclear power safety level, meets the requirements of different nuclear power projects by compiling configuration files; the logic algorithm has a secondary operation (confirmation or cancellation) function, prevents misoperation of a user, meets the human factor standard, and improves the safety and reliability of the GUI system.

The self-diagnosis module carries out fault diagnosis on the RAM and the ROM, monitors the program execution sequence of the GUI system, and improves the safety and stability of the GUI system.

The log files are stored in the non-volatile SPI-FLASH, free from being damaged or lost, thus the IEC-60880 nuclear safety standard is met.

It should be noted that the various components/steps described in the embodiment of the present invention may be split into more components/steps, or two or more components/steps or portions of the operations of the components/steps may be combined into new components/steps, as required by the implementation, to achieve the objectives of the embodiment of the present invention.

The above-described method according to the embodiment of the present invention may be implemented in hardware, firmware, or as software or computer code storable in a recording medium such as a CD ROM, RAM, floppy disk, hard disk or magnetooptical disk, or computer code originally stored in a remote recording medium or a non-transitory machine-readable medium and to be stored in a local recording medium downloaded through a network. The methods described herein may thus be stored in such software processes on a recording medium using a general-purpose computer, a special purpose processor, or programmable or special purpose hardware such as an ASIC or FPGA. It will be appreciated that a computer, processor, microprocessor controller, or programmable hardware includes a storage component (e.g., RAM, ROM, flash memory, etc.) that can store or receive software or computer code that, when accessed and executed by a computer, processor, or hardware, implements the GUI system described herein. Further, when the general-purpose computer accesses the code for implementing the GUI system shown herein, execution of the code converts the general-purpose computer into a special purpose computer for executing the GUI system shown herein.

Those of ordinary skill in the art will appreciate that the various illustrative elements and method steps described in connection with the embodiment disclosed herein may be implemented as electronic hardware, or combinations of computer software and electronic hardware. Whether such functionality is implemented as hardware or software depends upon the particular application and design constraints imposed on the particular implementation. Those skilled in the art may implement the described functionality in varying ways for each particular application, but such implementation is not intended to exceed the scope of the embodiment of the present invention.

## Claims

1. A graphical user interface, GUI, system, comprising:
a graphic library module (100), used for analyzing graphic data in configuration files to obtain at least following graphic files in operation panel: graphic files for basic graphics, graphic files for buttons and graphic files for texts, each graphic file comprises at least one of the following: graphic coordinates, length, width, and height;
an icon library module (102), used for analyzing icon data in configuration files to obtain icon files in the operation panel, each icon file comprises at least one of the following: length of the icon, width of the icon, and picture content of the icon;
a graph display module (104), used for drawing a GUI graph according to the data obtained by analyses of the graphic library module (100) and the data obtained by analyses of the icon library module (102);
wherein the configuration files further comprise algorithm data, network configuration data and field device configuration data, wherein the algorithm data logical comprises algorithms associated with a manual operation panel;
wherein the graphic library module (100) is further used for displaying status information of a field device and/or receiving an input through the manual operation panel to control operation of the field device, and running a logical algorithm associated with the manual operation panel and stored in the algorithm data, the logical algorithm comprises logical relationships between controls and variables and between a control and another in the manual operation panel;
the graph display module (104) is further used for calling SPI-FLASH and FLASH, wherein the FLASH is used for storing program code, the SPI-FLASH is used for storing the configuration files, and the configuration files are written into the SPI-FLASH when the GUI system is in a downloading mode, the FLASH and the SPI-FLASH are physically isolated, and the program code is physically isolated from the configuration file;
the graph display module (104) connects at least one of following functional units: the graph library module (100), the icon library module (102) and the operation panel, and the graph display module (104) is further used for displaying graphic files in the operation panel at least one of the basic graphics , the buttons, the texts and the icon files in the operation panel;
wherein, the configuration files are used to indicate the basic settings and basic files loaded by the GUI system, the configuration files comprise a number of engineering project application files, which are files for engineering applications of different nuclear power projects.

2. The GUI system according to claim 1, wherein the GUI system further comprises and a plurality of templates of the manual operation panel, the templates are used for indicating use cases of the manual operation panel.

3. The GUI system according to claim 1, wherein the GUI system further comprises:
a self-diagnosis module, used for performing fault diagnosis on a RAM and a ROM of the GUI system and monitoring a program execution sequence of the GUI system.

4. The GUI system according to claim 3, wherein the self-diagnosis module is configured to perform ROM fault diagnosis by determining whether a cyclic redundancy check value of the ROM is the same as a cyclic redundancy check value of the GUI system at an initialization phase when the GUI system is in a periodic operation phase.

5. The GUI system according to claim 3, wherein the RAM stores dynamic page parameter data and the algorithm data.

6. The GUI system according to claim 5, wherein the graphic data is associated with a memory address in the RAM storing the dynamic page parameter data.

7. The GUI system according to claim 3, wherein the ROM stores a font library, the icon data and the graphic data.

8. The GUI system according to claim 7, wherein the font library is copied to the ROM by FLASH of the GUI system, the FLASH storing program code including a Boot code, a GUI code and a font library.

9. The GUI system of claim 8, wherein the configuration files are written to an SPI-FLASH of the GUI system when the GUI system is in a downloading mode, the SPI-FLASH further storing a log file.

10. The GUI system of claim 9, wherein the FLASH and the SPI-FLASH are physically isolated.

## Patentansprüche

1. System einer grafischen Benutzeroberfläche, GUI-System, umfassend:
ein Grafikbibliothekenmodul (100), das zum Analysieren von Grafikdaten in Konfigurationsdateien verwendet wird, um mindestens folgende Grafikdateien im Bedienfeld zu erhalten: Grafikdateien für Basisgrafiken, Grafikdateien für Schaltflächen und Grafikdateien für Texte, wobei jede Grafikdatei mindestens eines von Folgendem umfasst: Grafikkoordinaten, Länge, Breite und Höhe;
ein Symbolbibliothekenmodul (102), das zum Analysieren von Symboldaten in Konfigurationsdateien verwendet wird, um Symboldateien im Bedienfeld zu erhalten, wobei jede Symboldatei mindestens eines von Folgendem umfasst: Länge des Symbols, Breite des Symbols und Bildinhalt des Symbols;
ein Grafikanzeigemodul (104), das zum Zeichnen einer GUI-Grafik gemäß den durch Analysen des Grafikbibliothekenmoduls (100) und den durch Analysen des Symbolbibliothekenmoduls (102) erhaltenen Daten verwendet wird;
wobei die Konfigurationsdateien ferner Algorithmusdaten, Netzwerkkonfigurationsdaten und Feldgerätekonfigurationsdaten umfassen, wobei die Algorithmusdatenlogik Algorithmen umfasst, die einem manuellen Bedienfeld zugeordnet sind;
wobei das Grafikbibliothekenmodul (100) ferner zum Anzeigen von Statusinformationen einer Feldvorrichtung und/oder zum Empfangen eines Eingangs über das manuelle Bedienfeld zum Steuern des Betriebs der Feldvorrichtung und zum Ausführen eines logischen Algorithmus verwendet wird, der dem manuellen Bedienfeld zugeordnet und in den Algorithmusdaten gespeichert ist, wobei der logische Algorithmus logische Beziehungen zwischen Steuerungen und Variablen und zwischen einer Steuerung und einer anderen im manuellen Bedienfeld umfasst;
das Grafikanzeigemodul (104) ferner zum Aufrufen von SPI-FLASH und FLASH verwendet wird, wobei der FLASH zum Speichern von Programmcode verwendet wird, der SPI-FLASH zum Speichern der Konfigurationsdateien verwendet wird und die Konfigurationsdateien in den SPI-FLASH geschrieben werden, wenn sich das GUI-System in einem Download-Modus befindet, der FLASH und der SPI-FLASH physisch isoliert sind und der Programmcode physisch von der Konfigurationsdatei isoliert ist;
das Grafikanzeigemodul (104) mindestens eine der folgenden Funktionseinheiten verbindet: das Grafikbibliothekenmodul (100), das Symbolbibliothekenmodul (102) und das Bedienfeld, und das Grafikanzeigemodul (104) ferner zum Anzeigen von Grafikdateien im Bedienfeld mindestens einer der Basisgrafiken, der Schaltflächen, der Texte und der Symboldateien im Bedienfeld verwendet wird;
wobei die Konfigurationsdateien verwendet werden, um die vom GUI-System geladenen Grundeinstellungen und Grunddateien anzuzeigen, wobei die Konfigurationsdateien eine Anzahl von Engineering-Projektanwendungsdateien umfassen, die Dateien für Engineering-Anwendungen verschiedener Kernkraftprojekte sind.

2. GUI-System nach Anspruch 1, wobei das GUI-System ferner eine Vielzahl von Vorlagen des manuellen Bedienfelds umfasst, wobei die Vorlagen zum Anzeigen von Anwendungsfällen des manuellen Bedienfelds verwendet werden.

3. GUI-System nach Anspruch 1, wobei das GUI-System ferner umfasst:
ein Selbstdiagnosemodul, das zum Durchführen einer Fehlerdiagnose auf einem RAM und einem ROM des GUI-Systems und zum Überwachen einer Programmausführungssequenz des GUI-Systems verwendet wird.

4. GUI-System nach Anspruch 3, wobei das Selbstdiagnosemodul so konfiguriert ist, dass es eine ROM-Fehlerdiagnose durchführt, indem es bestimmt, ob ein zyklischer Redundanzprüfwert des ROM derselbe ist wie ein zyklischer Redundanzprüfwert des GUI-Systems in einer Initialisierungsphase, wenn sich das GUI-System in einer periodischen Betriebsphase befindet.

5. GUI-System nach Anspruch 3, wobei der RAM dynamische Seitenparameterdaten und die Algorithmusdaten speichert.

6. GUI-System nach Anspruch 5, wobei die Grafikdaten einer Speicheradresse im RAM zugeordnet sind, in dem die dynamischen Seitenparameterdaten gespeichert sind.

7. GUI-System nach Anspruch 3, wobei der ROM eine Schriftartenbibliothek, die Symboldaten und die Grafikdaten speichert.

8. GUI-System nach Anspruch 7, wobei die Schriftartenbibliothek durch den FLASH des GUI-Systems in den ROM kopiert wird, wobei der FLASH-Speicherprogrammcode einschließlich eines Bootcodes, eines GUI-Codes und einer Schriftartenbibliothek speichert.

9. GUI-System nach Anspruch 8, wobei die Konfigurationsdateien in einen SPI-FLASH des GUI-Systems geschrieben werden, wenn sich das GUI-System in einem Download-Modus befindet, wobei der SPI-FLASH weiterhin eine Protokolldatei speichert.

10. GUI-System nach Anspruch 9, wobei der FLASH und der SPI-FLASH physisch isoliert sind.

## Revendications

1. Système d'interface utilisateur graphique, GUI, comprenant :
un module de bibliothèque graphique (100), utilisé pour analyser des données graphiques dans des fichiers de configuration afin d'obtenir au moins les fichiers graphiques suivants dans un panneau d'exploitation : des fichiers graphiques pour des graphiques de base, des fichiers graphiques pour des boutons et des fichiers graphiques pour des textes, chaque fichier graphique comprend au moins l'une de ce qui suit : des coordonnées graphiques, une longueur, une largeur et une hauteur ;
un module de bibliothèque d'icônes (102), utilisé pour analyser des données d'icônes dans des fichiers de configuration afin d'obtenir des fichiers d'icônes dans le panneau d'exploitation, chaque fichier d'icône comprend au moins l'un de ce qui suit : la longueur de l'icône, la largeur de l'icône et le contenu d'image de l'icône ;
un module d'affichage de graphique (104), utilisé pour dessiner un graphique GUI selon les données obtenues par les analyses du module de bibliothèque graphique (100) et les données obtenues par les analyses du module de bibliothèque d'icônes (102) ;
dans lequel les fichiers de configuration comprennent en outre des données d'algorithme, des données de configuration de réseau et des données de configuration de dispositif de terrain, où les données d'algorithme comprennent logiquement des algorithmes associés à un panneau d'exploitation manuel ;
dans lequel le module de bibliothèque graphique (100) est en outre utilisé pour afficher des informations d'état d'un dispositif de terrain et/ou recevoir une entrée à travers le panneau d'exploitation manuel afin de commander le fonctionnement du dispositif de terrain, et exécuter un algorithme logique associé au panneau d'exploitation manuel et stocké dans les données d'algorithme, l'algorithme logique comprend des relations logiques entre des commandes et des variables et entre une commande et une autre dans le panneau d'exploitation manuel ;
le module d'affichage de graphique (104) est en outre utilisé pour appeler une SPI-FLASH et une FLASH,
dans lequel la FLASH est utilisée pour stocker un code de programme, la SPI-FLASH est utilisée pour stocker les fichiers de configuration, et les fichiers de configuration sont écrits dans la SPI-FLASH lorsque le système GUI est dans un mode de téléchargement, la FLASH et la SPI-FLASH sont physiquement isolées, et le code de programme est physiquement isolé du fichier de configuration ;
le module d'affichage de graphique (104) relie au moins l'une des unités fonctionnelles suivantes : le module de bibliothèque graphique (100), le module de bibliothèque d'icônes (102) et le panneau d'exploitation, et
le module d'affichage de graphique (104) est en outre utilisé pour afficher des fichiers graphiques dans le panneau d'exploitation, au moins l'un parmi les graphiques de base, les boutons, les textes et les fichiers d'icônes dans le panneau d'exploitation ;
dans lequel les fichiers de configuration sont utilisés pour indiquer les réglages de base et les fichiers de base chargés par le système GUI, les fichiers de configuration comprennent un certain nombre de fichiers d'application de projet d'ingénierie, qui sont des fichiers pour des applications d'ingénierie de différents projets de centrales nucléaires.

2. Système GUI selon la revendication 1, dans lequel le système GUI comprend en outre une pluralité de modèles du panneau d'exploitation manuel, les modèles sont utilisés pour indiquer des cas d'utilisation du panneau d'exploitation manuel.

3. Système GUI selon la revendication 1, dans lequel le système GUI comprend en outre :
un module d'autodiagnostic, utilisé pour effectuer un diagnostic de défaut sur une RAM et une ROM du système GUI et pour surveiller une séquence d'exécution de programme du système GUI.

4. Système GUI selon la revendication 3, dans lequel le module d'autodiagnostic est configuré pour effectuer un diagnostic de défaut de ROM en déterminant si une valeur de contrôle de redondance cyclique de la ROM est la même qu'une valeur de contrôle de redondance cyclique du système GUI à une phase d'initialisation lorsque le système GUI est dans une phase de fonctionnement périodique.

5. Système GUI selon la revendication 3, dans lequel la RAM stocke des données de paramètres de page dynamiques et les données d'algorithme.

6. Système GUI selon la revendication 5, dans lequel les données graphiques sont associées à une adresse mémoire dans la RAM stockant les données de paramètres de page dynamiques.

7. Système GUI selon la revendication 3, dans lequel la ROM stocke une bibliothèque de polices, les données d'icônes et les données graphiques.

8. Système GUI selon la revendication 7, dans lequel la bibliothèque de polices est copiée dans la ROM par une FLASH du système GUI, la FLASH stockant un code de programme comprenant un code de démarrage, un code GUI et une bibliothèque de polices.

9. Système GUI selon la revendication 8, dans lequel les fichiers de configuration sont écrits dans une SPI-FLASH du système GUI lorsque le système GUI est dans un mode de téléchargement, la SPI-FLASH stockant en outre un fichier journal.

10. Système GUI selon la revendication 9, dans lequel la FLASH et la SPI-FLASH sont physiquement isolées.
